(19) Europäisches Patentamt
European Patent Office
Office européen des brevets

(11) EP 3 006 705 A1

(12) EUROPEAN PATENT APPLICATION
published in accordance with Art. 153(4) EPC

(43) Date of publication:
13.04.2016 Bulletin 2016/15

(51) Int Cl.:
F02D 41/04 (2006.01)

(21) Application number: 13886180.2

(22) Date of filing: 05.06.2013

(86) International application number:
PCT/JP2013/065594

(87) International publication number:
WO 2014/196035 (11.12.2014 Gazette 2014/50)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: TOYOTA JIDOSHA KABUSHIKI
KAISHA
Toyota-shi, Aichi-ken, 471-8571 (JP)

(72) Inventors:
• OYAGI Hiroshi
Toyota-shi
Aichi 471-8571 (JP)

• IWATA Kazuyasu
Toyota-shi
Aichi 471-8571 (JP)
• YAMASHITA Akira
Toyota-shi
Aichi 471-8571 (JP)

(74) Representative: Smith, Samuel Leonard
J A Kemp
14 South Square
Gray's Inn
London WC1R 5JJ (GB)

(54) **CONTROL DEVICE FOR INTERNAL COMBUSTION ENGINE**

(57) A control device for an internal combustion engine according to the present invention (the present device) changes the combustion state of air fuel mixture such that if at least the load on the engine 10 falls within the range between a first threshold value Pem1 and a second threshold value Pem2, a heat release rate gravity center position Gc is equal to a given crank angle θa independent of an engine load, or if the engine load falls within the range beyond the second threshold value Pem2, the heat release rate gravity center position Gc is changed to a value on a retarded angle side in a range closer to the retarded angle side than the given crank angle θa as the engine load is increased. A combustion state is changed by, for example, one or more of combustion parameters such as a main injection period of fuel, a fuel injection pressure (common-rail injection system pressure), the injection quantity, the timing, and the number of times of pilot injection, a turbocharging pressure, and an EGR amount.

FIG. 3

EP 3 006 705 A1

**Description**

TECHNICAL FIELD

The present invention relates to a control device that controls the combustion state of fuel (air fuel mixture) supplied to an internal combustion engine.

BACKGROUND ART

In general, in the operation of an internal combustion engine such as a diesel engine (hereafter, also simply referred to as an engine), part of energy produced by combustion of air fuel mixture is converted into work to rotate a crankshaft while the remainder is lost. This loss includes a cooling loss, an exhaust loss, a pumping loss generated with air intake and air exhaust, a mechanical resistance loss, and the like. Of these, the cooling loss and the exhaust loss account for a large ratio of the total loss. Therefore, in order to improve the fuel efficiency of an internal combustion engine, it is effective to reduce the cooling loss and the exhaust loss.

However, in general, the cooling loss and the exhaust loss are in a trade-off relationship. That is, when the cooling loss is reduced, the exhaust loss is increased, and if the exhaust loss is reduced, the cooling loss is increased. Therefore, if a combustion state in which the sum of the cooling loss and the exhaust loss is minimized is realized, the fuel efficiency of an engine can be significantly improved.

Now, a combustion state varies in accordance a lot of parameters, such as a fuel injection timing and a turbocharging pressure, that have influences on the combustion state. Hereinafter, parameters having influences on the combustion state will be also simply referred to as combustion parameters. However, finding in advance the combustion parameters according to experiments, simulations, and the like such that a plurality of combustion parameters becomes appropriate values (combinations) for each operating state is not easy and takes an enormous adaptation time. For this reason, techniques to systematically determine the combustion parameters have been proposed.

For example, one of conventional control devices (hereafter, also referred to as a conventional device) calculates a crank angle at the time when half the total heat quantity is generated, the total heat quantity being generated in one combustion stroke is generated (hereafter, referred to as a combustion gravity center angle). Furthermore, if the combustion gravity center angle deviates from a predetermined reference value, the conventional device makes the combustion gravity center angle coincides with the reference value by correcting the fuel injection timing or by adjusting an EGR rate to regulate an oxygen content in a combustion chamber (cylinder) (e.g., see Patent Literature 1).

PATENT LITERATURE

Patent Literature 1: Japanese Patent Application Publication No. 2011-202629

SUMMARY OF THE INVENTION

For example, a diesel engine in some cases performs multiple injections in which fuel is injected multiple times in combustion in one cycle. More specifically, a diesel engine in some cases performs pilot injection prior to main injection and subsequently performs the main injection. Furthermore, after injection is in some cases performed after the main injection.

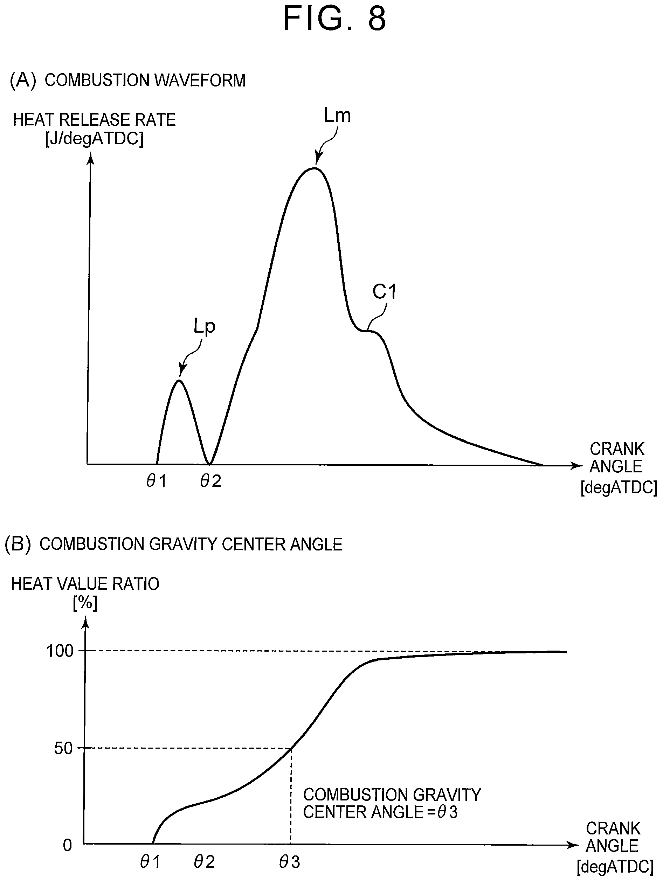

The relationship between a crank angle and a heat release rate when the pilot injection and the main injection are performed is shown by a waveform drown as a curve C1 in FIG. 8(A). The heat release rate is the amount of heat that is generated by the combustion of air fuel mixture per a unit crank angle (the unit amount of change in the rotational position of a crankshaft), that is, heat production per unit crank angle. The waveform will be also referred to as a combustion waveform below. The waveform shown in FIG. 8(A) reaches a local maximum value Lp by the pilot injection that is started at a crank angle $\theta 1$ and reaches a local maximum value Lm by the main injection that is started at a crank angle $\theta 2$.

Furthermore, FIG. 8(B) shows the relationship between a crank angle and the ratio of the integrated value of heat quantity that is generated by combustion shown by the curve C1, to a total generated heat quantity (heat value ratio). In the example shown in FIG. 8(B), the above-mentioned combustion gravity center angle (a crank angle at which the heat value ratio becomes 50%) is a crank angle $\theta 3$.

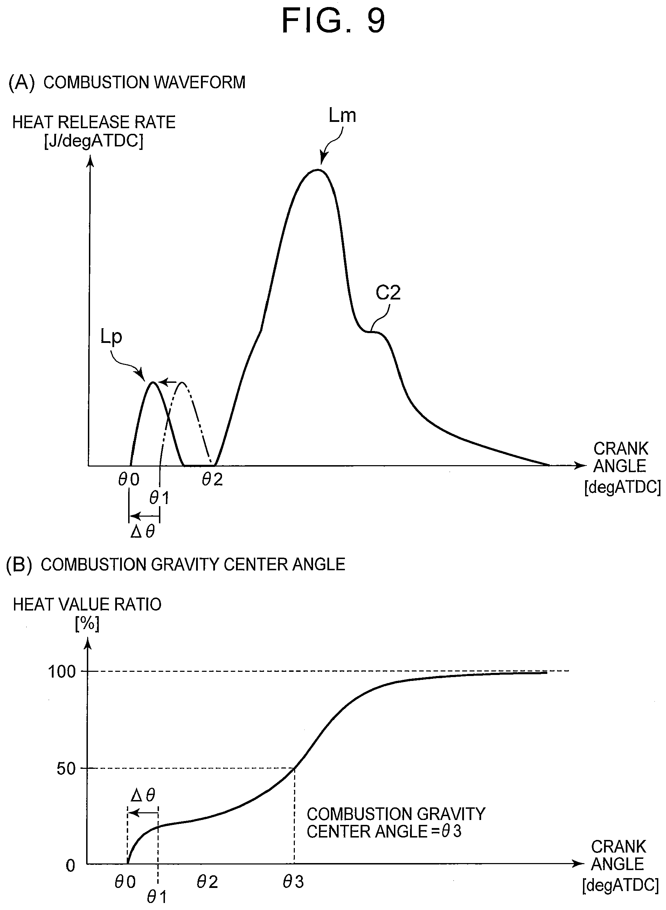

In contrast to this, as shown by a solid line C2 in FIG. 9(A), if only the start time of the pilot injection is shifted to an advanced angle side by $\Delta\theta$ from the crank angle $\theta 1$ to a crank angle $\theta 0$, the combustion of fuel in the pilot injection causes a crank angle at which the heat generation starts (heat generation starting angle, combustion starting crank angle) to be shifted to the advanced angle side by $\Delta\theta$. However, in the combustions shown in FIG. 8(A) and FIG. 9(A), the combustion gravity center angle is after the combustion of fuel in the main injection is started (after the crank angle θ2). Therefore, as understood from FIG. 9(B) that shows a heat value ratio in the combustion shown by the curve C2, the combustion gravity center angle remains the crank angle θ3 and is unchanged. That is, there is a case where the combustion gravity center angle is not be changed even if the combustion waveform is changed by the shift of a pilot injection period to the advanced angle side. In other words, the combustion gravity center angle is not necessarily an index value that accurately reflects the combustion state in each cycle.

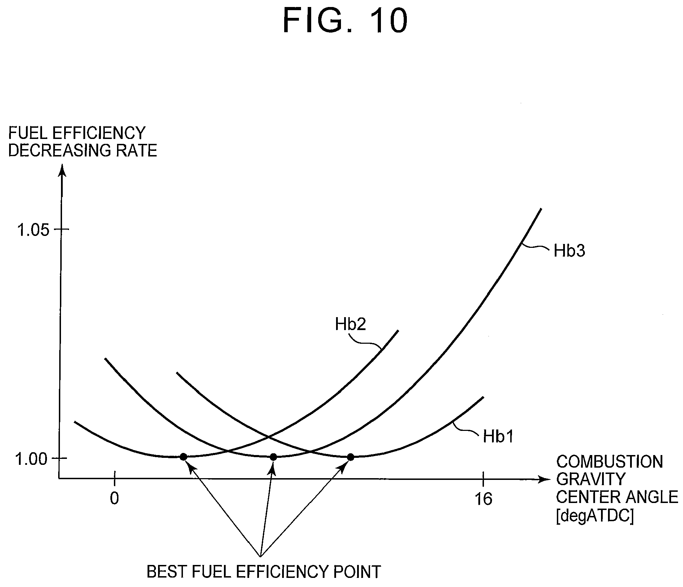

The inventor actually determined the relationship between a combustion gravity center angle and a fuel efficiency decreasing rate with respect to various engine loads and engine rotational speeds. The measurement results are shown in FIG. 10. Curves Hb1 to Hb3 in FIG. 10 are the determination results in the cases of low rotational speed and low load, middle rotational speed and middle load, and high rotational speed and high load, respectively. As understood from FIG. 10, the inventor acquired the knowledge that the variations in engine load and/or engine rotational speed varies a combustion gravity center angle at which a fuel efficiency decreasing rate is minimized (a combustion gravity center angle at which a fuel efficiency becomes the best). In other words, it was found that even if the combustion state is controlled such that the combustion gravity center angle coincides with a certain reference value, the fuel efficiency decreasing rate is not minimized as long as the engine load and/or the engine rotational speed vary.

Thus, the inventor paid attention to, instead of the conventionally used combustion gravity center angle, a heat release rate gravity center position, as an index value that represents the combustion state. The heat release rate gravity center position is defined by various techniques as will be described below. The heat release rate gravity center position is expressed by a crankshaft rotational position (i.e., a crank angle).

(Definition 1)

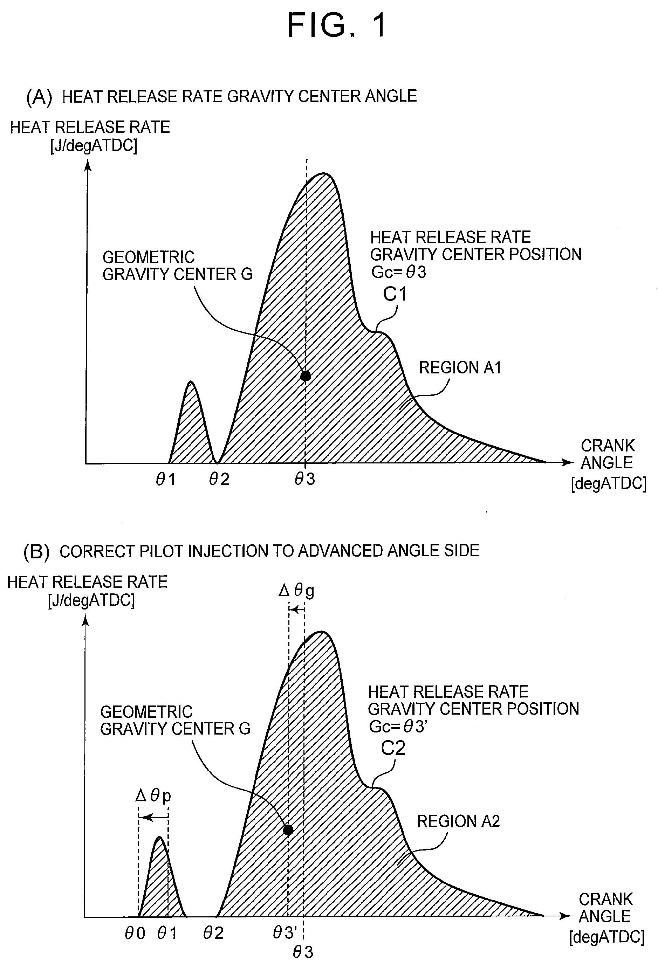

A heat release rate gravity center position Gc is, as shown in FIG. 1(A), a crank angle that corresponds to a geometric gravity center G of a region surrounded by the waveform of heat release rate drawn in a coordinate system (a graph), where a crank angle is set to the horizontal axis, and a heat release rate (the amount of heat production per unit crank angle) is set to the vertical axis, and the horizontal axis.

(Definition 2)

The heat release rate gravity center position Gc is a crank angle Gc that satisfies the following Expression (1). In Expression (1), CAs is a crank angle at which the combustion of fuel is started (a combustion starting crank angle), and CAe is a crank angle at which the combustion is ended (a combustion ending crank angle). Furthermore, θ is any crank angle, and dQ(θ) is a heat release rate at the crank angle θ. That is, the heat release rate gravity center position Gc is a specific crank angle at which a value obtained by integrating, with respect to crank angle, the product of both of a crank angle difference (Gc-θ) between any crank angle (θ) that is to the advanced angle side from a specific crank angle (Gc) and the specific crank angle (Gc), and a heat release rate (dQ(θ)) at the any crank angle (the value of the left side of the following (1)) is equal to a value obtained by integrating, with respect to crank angle, the product of both of a crank angle difference (θ-Gc) between any crank angle (θ) to the retarded angle side from the specific crank angle (Gc) and the specific crank angle (Gc), and a heat release rate (dQ(θ)) at the any crank angle (the value of the right side of the following (1)).

[Expression 1]

$$\int_{CAs}^{Gc}(Gc - \theta)dQ(\theta)d\theta = \int_{Gc}^{CAe}(\theta - Gc)dQ(\theta)d\theta \cdots (1)$$

(Definition 2')

The above Expression (1) can be transformed into the following Expression (2). Therefore, another description of Definition 2 is that the heat release rate gravity center position Gc is a specific crank angle between the combustion starting crank angle and the combustion ending crank angle in one combustion stroke, at which a value obtained by integrating (adding), with respect to crank angle, from the combustion starting crank angle CAs to the combustion ending crank angle CAe, a value corresponding to a product (θ-Gc)dQ(θ) of a value (θ-Gc) obtained by subtracting the specific crank angle from any crank angle, and a heat release rate (dQ(θ)) at the any crank angle (θ), is zero.

[Expression 2]

$$\int_{CAs}^{CAc} (\theta - Gc) dQ(\theta) d\theta = 0 \quad \cdots (2)$$

(Definition 3)

On the basis of Definition 2 and Definition 2', the heat release rate gravity center position Gc is defined as a crank angle that is calculated by an arithmetic conforming to the following Expression (3).

[Expression 3]

$$Gc = \frac{\int_{CAs}^{CAc} (\theta - CAs) dQ(\theta) d\theta}{\int_{CAs}^{CAc} dQ(\theta) d\theta} + CAs \cdots (3)$$

(Definition 3')

On the basis of Definition 3, the heat release rate gravity center position Gc is defined as a crank angle obtained by adding the combustion starting crank angle (CAs) to a value obtained by dividing an integrated value of, with respect to crank angle, a product (A*B) of a difference (A=$\theta$-CAs) between any crank angle and the combustion starting crank angle, and a heat release rate (B=dQ($\theta$)) at the any crank angle (the numerator of the first term of the right side in the above Expression (3)) by the area of the region defined by the waveform of heat release rate with respect to crank angle (the denominator of the first term of the right side in the above Expression (3)).

The heat release rate gravity center position Gc is, for example, the crank angle $\theta3$ in the example shown in FIG. 1(A). Additionally, as shown in FIG. 1 (B), when the start time of the pilot injection is shifted to the advanced angle side from the crank angle $\theta1$ by $\Delta\theta p$ to be set at the crank angle $\theta0$, the heat release rate gravity center position Gc is shifted to the advanced angle side by the crank angle $\Delta\theta g$ to be a crank angle $\theta3'$. As understood from the above, the heat release rate gravity center position can be considered to be an index value that accurately reflects the combustion state as compared with the combustion gravity center angle, which is the conventional index value of the combustion state.

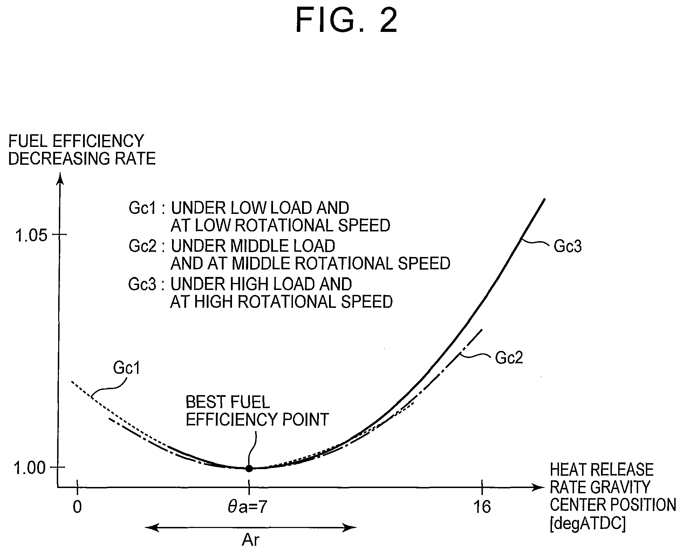

Furthermore, the inventor determined the relationship between a heat release rate gravity center position and a fuel efficiency decreasing rate with respect to various combinations of an engine rotational speed and an engine load (requested torque). The results are shown in FIG. 2. The curve Gc1 to curve Gc3 in FIG. 2 are the determination results in the cases of low rotational speed and low load, middle rotational speed and middle load, and high rotational speed and high load, respectively. As understood from FIG. 2, a heat release rate gravity center position at which the fuel efficiency decreasing rate is minimized even if the engine rotational speed and the engine load vary is a specified crank angle (that was 7° after a compression top dead center in the example in FIG. 2). Furthermore, it is understood that when the heat release rate gravity center position is a value near this specified crank angle (e.g., 7° after the compression top dead center) (see a range shown by an arrow Ar in FIG. 2), the fuel efficiency decreasing rate is a substantially constant value near the minimum value regardless of the engine rotational speed and the engine load.

From the above, the inventor acquired a knowledge that the heat release rate gravity center position is an index value preferably indicating the combustion state, and it is therefore possible to maintain the combustion state of the engine in a specified state by keeping the heat release rate gravity center position constant independent of the load and/or the engine rotational speed. Furthermore, the inventor acquired a knowledge that if the heat release rate gravity center position is maintained at a certain target crank angle at which the fuel efficiency decreasing rate is minimized (i.e., the sum of the cooling loss and the exhaust loss is minimized, and the fuel efficiency becomes the best), it is possible to easily improve the fuel efficiency of the engine independent of the operating state of the engine (the load and/or the engine rotational speed).

However, it was found that, in a state in which the heat release rate gravity center position is maintained at the certain crank angle, if the engine load reaches a region near a wide-open throttle (i.e., when the fuel injection quantity is largely increased) the maximum value of the in-cylinder pressure in the combustion exceeds an allowable pressure.

Therefore, an object of the present invention is to provide a control device that can cause the maximum value of in-cylinder pressure not to exceed an allowable pressure in a high load operating state while controlling a heat release rate gravity center position to an appropriate crank angle.

A control device for an internal combustion engine according to the present invention to achieve the object (hereafter, also referred to as the device of the present invention) causes the combustion state to be changed such that if at least the engine load falls within a range between a first threshold value and a second threshold value that is greater than the first threshold value (the specific range), the heat release rate gravity center position is equal to the given crank angle independent of the engine load. Note that the first threshold value may be the minimum value of loads that the engine takes, or may be a value greater than the minimum value. Furthermore, controlling the combustion state is substantially equivalent to setting the combustion parameters (i.e., setting/changing the combustion parameters under feedforward control and/or feedback control to appropriate values in accordance with the operating state of the engine).

According to the device of the present invention, if at least the engine load falls within the specific range, it is possible to maintain the combustion state in a stable state independent of the engine load. Furthermore, in this case, combustion parameters may be adapted such that the heat release rate gravity center position becomes the given crank angle, which enables the significant reduction in person-hours for the adaptation. Additionally, if the given crank angle is set at a crank angle at which the sum of cooling loss of the engine and exhaust loss of the engine is minimized (hereafter, also referred to as a best fuel efficiency crank angle), or at a crank angle within a predetermined range (a minute range) from the best fuel efficiency crank angle (see the range indicated by an arrow Ar in FIG. 2), it is possible to easily improve the fuel efficiency of the engine than ever before at least when the engine load falls within the specific range.

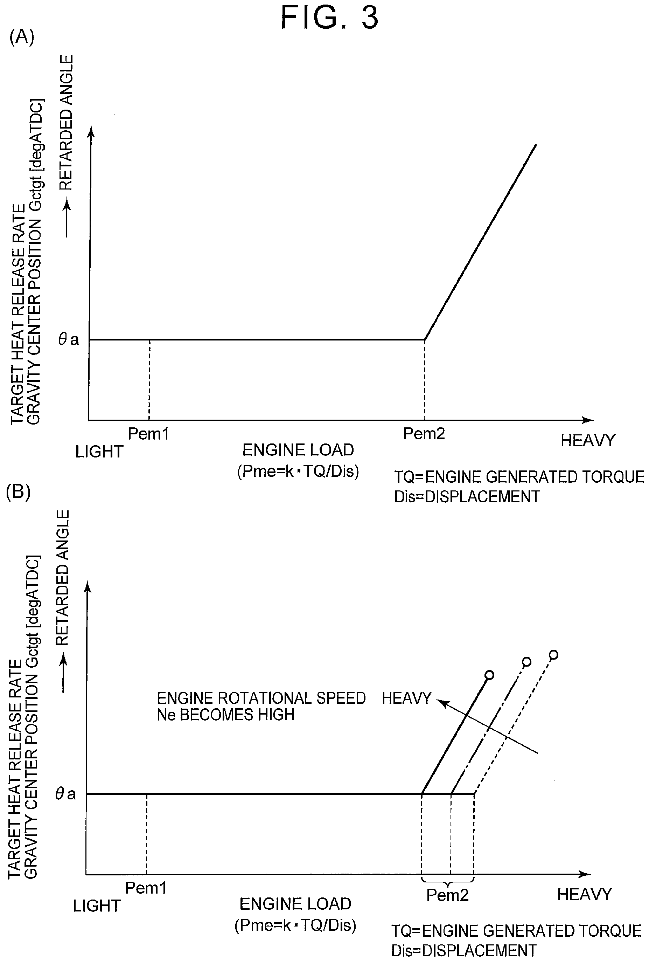

Moreover, the device of the present invention causes the combustion state to be changed such that, if the engine load falls within a range beyond the second threshold value, the heat release rate gravity center position is changed to a value closer to a retarded angle side in a range closer to a retarded angle side than the given crank angle as the engine load is increased (see FIG. 3(A)).

If the heat release rate gravity center position is changed to the retarded angle side, the maximum value of the in-cylinder pressure is reduced even if the fuel injection quantity is constant. Therefore, according to the device of the present invention, it is possible to realize combustion control in consideration of the heat release rate gravity center position as an index value indicating the combustion state while causing the maximum value of the in-cylinder pressure in combustion not to exceed the allowable pressure. Additionally, if the given crank angle is set at the best fuel efficiency crank angle or a crank angle near the best fuel efficiency crank angle, the device of the present invention can control the combustion state such that, if the engine load is equal to or higher than the second threshold value, the heat release rate gravity center position is made as closer to the best fuel efficiency crank angle as possible (i.e., such that the exhaust loss is reduced as much as possible) while causing the maximum value of the in-cylinder pressure not to exceed the allowable pressure. That is, under high load, the device of the present invention can improve the fuel efficiency and generate a requested torque while maintaining the maximum value of the in-cylinder pressure within an allowable pressure range. In other words, the device of the present invention can reduce the maximum value of the in-cylinder pressure below the allowable pressure without reducing the engine generated torque from a target torque (requested torque).

Note that, as mentioned above, at the time of controlling the heat release rate gravity center position to a predetermined crank angle (the certain crank angle or a crank angle on the retarded angle side), the device of the present invention may perform feedforward control using combustion parameters that are determined in advance so as to realize such a heat release rate gravity center position. Furthermore, the device of the present invention may estimate an actual heat release rate gravity center position and may perform feedback control to change (correct) combustion parameters, in place of or in addition to the feedforward control, such that the estimated actual heat release rate gravity center position is equal to the predetermined crank angle (the certain crank angle or the crank angle on the retarded angle side).

Now, in general, the fuel injection has to be finished in a short time period at a higher engine rotational speed, and therefore a fuel injection pressure (e.g., a common-rail injection system pressure) has to be increased. As a result, at a higher engine rotational speed, the maximum value of the in-cylinder pressure is increased. Therefore, the second threshold value (the minimum value of a load needed to shift the heat release rate gravity center position to a crank angle closer to the retarded angle side than the certain crank angle in order to make the maximum value of the in-cylinder pressure equal to or lower than the allowable pressure) is decreased at a higher engine rotational speed. Therefore, the second threshold value is desirably decreased at a higher engine rotational speed.

If the second threshold value is maintained constant with respect to the engine rotational speed, in order to make the maximum value of the in-cylinder pressure equal to or lower than the allowable pressure for all engine rotational speeds, since the second threshold value becomes a value in the case where the engine rotational speed is near an assumed highest rotational speed, the heat release rate gravity center position is retarded despite no need for the retardation at a low engine rotational speed, and the fuel efficiency is reduced as a result. In contrast to this, if the second threshold value is set so as to be decreased at a higher engine rotational speed, the heat release rate gravity center does not need to be retarded unnecessarily at a low engine rotational speed, and thus the fuel efficiency of the engine can be made preferable.

Furthermore, if the engine load is any predetermined load in a range beyond the second threshold value (e.g., the minimum value of the second threshold values), it is preferable to set the combustion parameters such that the heat release rate gravity center position is a crank angle closer to the retarded angle side at a higher engine rotational speed. Also by this setting, the heat release rate gravity center does not need to be retarded unnecessarily at a low engine rotational speed, and thus the fuel efficiency of the engine can be made preferable.

Note that, the second threshold value can be considered to be a value of a load at which the maximum value of the in-cylinder pressure of the engine exceeds the allowable pressure if the heat release rate gravity center position is not changed to the retarded angle side in the case where the fuel injection quantity is increased with an increase in requested torque or an increase in a requested output, (an engine load in a state in which the maximum value of the in-cylinder pressure exceeds the allowable pressure).

Furthermore, in the device of the present invention, the heat release rate gravity center position can be a crank angle that is determined in accordance with the engine load or the fuel injection quantity (i.e., a value that has a correlation with a gas pedal opening degree (a gas pedal manipulated variable)) and the engine rotational speed. With this, it is possible to easily set an appropriate heat release rate gravity center position with which the fuel efficiency can be improved while causing the maximum value of the in-cylinder pressure not to exceed the allowable pressure.

The other objects, features, and accompanying advantages of the present invention will be readily understood through the description of an embodiment of the present invention that will be made with reference to the accompanying drawings.

BRIEF DESCRIPTION OF THE DRAWINGS

[FIG. 1] FIG. 1 is a graph for illustrating a heat release rate gravity center position (heat release rate gravity center crank angle), where (A) shows a combustion waveform in the case where a pilot injection and a main injection are performed with a predetermined timing, and (B) shows a combustion waveform in the case where the pilot injection is advanced as compared with (A).

[FIG. 2] FIG. 2 is a graph showing the relationship between the heat release rate gravity center position and a fuel efficiency decreasing rate for each combination of an engine rotational speed and an engine load.

[FIG. 3] FIG. 3 is a graph showing the relationship between the engine load and a target heat release rate gravity center position (target crank angle), where (A) shows an example of shifting the target crank angle in accordance with the engine load, and (B) shows an example of shifting the target crank angle in accordance with the engine load and the engine rotational speed.

[FIG. 4] FIG. 4 is a schematic configuration diagram of a control device according to an embodiment of the present invention, and of an internal combustion engine to which the control device is applied.

[FIG. 5] FIG. 5 is a flowchart showing a routine executed by a CPU of the control device shown in FIG. 4.

[FIG. 6] FIG. 6 is a flowchart showing a routine executed by a CPU of the control device shown in FIG. 4.

[FIG. 7] FIG. 7 is a flowchart showing a routine executed by a CPU of the control device shown in FIG. 4.

[FIG. 8] FIG. 8 is a graph for illustrating a combustion gravity center angle.

[FIG. 9] FIG. 9 is a graph for illustrating a combustion gravity center angle.

[FIG. 10] FIG. 10 is a graph showing the relationship between the combustion gravity center angle and the fuel efficiency decreasing rate for each engine rotational speed.

MODES FOR CARRYING OUT THE INVENTION

Hereinafter, there will be described a control device of an internal combustion engine according to an embodiment of the present invention (hereafter, also referred to as the present control device) with reference to the drawings.

(Configuration)

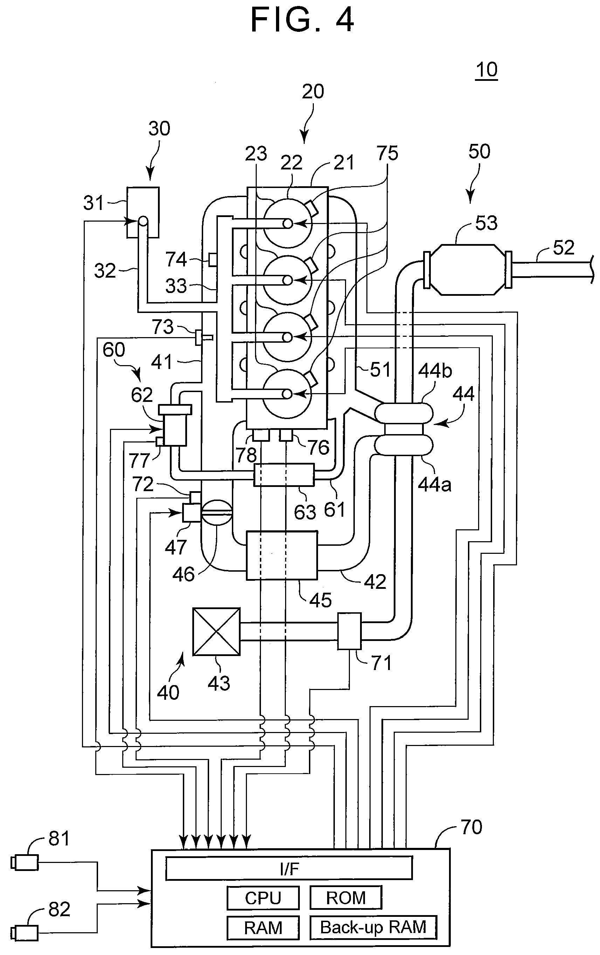

The present control device is applied to an internal combustion engine (an engine) 10 shown in FIG. 4. The engine 10 is a multi-cylinder (in-line four-cylinder in this example) four-stroke piston-reciprocating diesel engine. The engine 10 includes an engine main body 20, a fuel supply system 30, an air intake system 40, an exhaust system 50, and an EGR system 60.

The engine main body 20 includes a main body 21 that includes a cylinder block, a cylinder head, a crankcase, and the like. The main body 21 is provided with four cylinders (combustion chambers) 22 formed therein. In an upper portion of each cylinder 22, a fuel injection valve (an injector) 23 is arranged. The fuel injection valve 23 is configured to be opened in response to an instruction given by an engine ECU (electronic control unit) 70, which will be described below, so as to directly inject fuel into the cylinder.

The fuel supply system 30 includes a fuel pressure pump (supply pump) 31, a fuel feeding tube 32, and a common-rail injection system (accumulator) 33. An exhaust port of the fuel pressure pump 31 is connected to the fuel feeding tube 32. The fuel feeding tube 32 is connected to the common-rail injection system 33. The common-rail injection system 33 is connected to the fuel injection valve 23.

The fuel pressure pump 31 is configured to pump up fuel reserved in a fuel tank (not shown) and thereafter pressurize the fuel, and to supply the pressurized high-pressure fuel to the common-rail injection system 33 through the fuel feeding tube 32. The fuel pressure pump 31 functions by a driving shaft that is interlocked with the crankshaft of the engine 10. The fuel pressure pump 31 is configured to respond to an instruction from the ECU 70 by adjusting the fuel pressure in the common-rail injection system 33 (i.e., fuel injection pressure, common-rail pressure).

The air intake system 40 includes an intake manifold 41, an intake pipe 42, an air cleaner 43, a compressor 44a of a turbocharger 44, an intercooler 45, a throttle valve 46, and a throttle valve actuator 47.

The intake manifold 41 has branched portions that are connected to the respective cylinders, and an aggregated portion into which the branched portions are aggregated. The intake pipe 42 is connected to the aggregated portion of the intake manifold 41. The intake manifold 41 and the intake pipe 42 form an intake air passage. To the intake pipe 42, the air cleaner 43, the compressor 44a, the intercooler 45 and the throttle valve 46 are arranged in this order from the upstream to the downstream of intake air flow. The throttle valve actuator 47 is configured to change the degree of opening of the throttle valve 46 in response to an instruction from the ECU 70.

The intercooler 45 is configured to reduce the temperature of intake air. The intercooler 45 includes a bypass passage (not shown) and a bypass valve that is interposed on the bypass passage. Furthermore, the intercooler 45 is configured to adjust the quantity of cooling water (refrigerant) that flows between the intercooler and a refrigerator (not shown). Therefore, the intercooler 45 is configured to respond to an instruction from the ECU 70 by adjusting the degree of opening of the bypass valve and/or the volume of cooling water so as to change the cooling efficiency of the intercooler 45 (an efficiency expressed by a ratio between the temperature of gas flowing into intercooler 45 and the temperature of gas flowing out of the intercooler 45).

The exhaust system 50 includes an exhaust manifold 51, an exhaust pipe 52, a turbine 44b of the turbocharger 44, and an exhaust gas purifier (e.g., diesel oxidation catalyst, particulate filter) 53.

The exhaust manifold 51 includes branched portions that are connected to the respective cylinder, and an aggregated portion into which the branched portions aggregate. The exhaust pipe 52 is connected to the aggregated portion of the exhaust manifold 51. The exhaust manifold 51 and the exhaust pipe 52 form an exhaust passage. To the exhaust pipe 52, the turbine 44b and the exhaust gas purifier 53 are arranged from the upstream to the downstream of the flow of exhaust gas.

The turbocharger 44 is a known variable geometry turbocharger, and the turbine 44b thereof is provided with a plurality of nozzle vanes (variable nozzles), which are not shown. The nozzle vane is configured to respond to an instruction from the ECU 70 by changing the degree of opening, changing (controlling) turbocharging pressure as a result. Note that the turbine 44b of the turbocharger 44 may include a bypass passage of the turbine 44b (not shown) and a bypass valve that is provided on the bypass passage and the degree of the opening of this bypass valve may be changed in response to an instruction given by the ECU 70, changing the turbocharging pressure. That is, in the present specification, controlling the turbocharger 44 means changing the angles of the nozzle vanes and/or the degree of the opening of the bypass valve to change the turbocharging pressure.

The EGR system 60 includes an exhaust backflow pipe 61, an EGR control valve 62, and an EGR cooler 63.

The exhaust backflow pipe 61 connects a position on the exhaust passage (the exhaust manifold 51), the position being upstream of the turbine 44b, and a position on the intake air passage (the intake manifold 41), the position being downstream of the throttle valve 46. The exhaust backflow pipe 61 forms an EGR gas passage.

The EGR control valve 62 is arranged on the exhaust backflow pipe 61. The EGR control valve 62 is configured to respond an instruction from the ECU 70 to change the passage cross-sectional area of the EGR gas passage, changing the volume of exhaust gas (the EGR gas volume) that is recirculated from the exhaust passage to the intake air passage.

The EGR cooler 63 is interposed on the exhaust backflow pipe 61 and configured to reduce the temperature of EGR gas that passes the exhaust backflow pipe 61. The EGR cooler 63 includes a bypass passage (not shown) and a bypass valve that is interposed on the bypass passage. Furthermore, the EGR cooler 63 is configured to adjust the quantity of cooling water (refrigerant) that flows between the EGR cooler and a refrigerator (not shown). Therefore, the EGR cooler 63 is configured to respond to an instruction from the ECU 70 by adjusting the degree of opening of the bypass valve and/or the volume of cooling water so as to change the cooling efficiency of the EGR cooler 63 (an efficiency expressed by a ratio between the temperature of gas flowing into the EGR cooler 63 and the temperature of gas flowing out of the EGR cooler 63).

The ECU 70 is an electronic circuit including a known microcomputer and includes a CPU, a ROM, a RAM, a backup RAM, an interface, and the like. The ECU 70 is connected to sensors and the like, which will be described below, and configured to receive signals (obtain signal inputs) from the sensors. Furthermore, the ECU 70 is configured to send out instructing (driving) signals to various actuators.

The ECU 70 is connected to an air flow meter 71, a throttle valve opening sensor 72, an intake pipe pressure sensor 73, a fuel pressure sensor 74, in-cylinder pressure sensors 75, a crank angle sensor 76, an EGR control valve opening degree sensor 77, and a water temperature sensor 78.

The air flow meter 71 measures a mass flow rate (an intake air amount) of intake air (fresh air without EGR gas) passing through the intake air passage and outputs a signal that represents an intake air amount Ga in question. Furthermore, the air flow meter 71 detects the temperature of the intake air (an intake air temperature) and outputs a signal that represents an intake air temperature THA in question.

The throttle valve opening sensor 72 detects a throttle valve opening and outputs a signal that represents a throttle valve opening TA in question.

The intake pipe pressure sensor 73 outputs a signal that represents a gas pressure (intake pipe pressure) Pim in the intake pipe, which is the intake air passage, at a position downstream of the throttle valve 46. The intake pipe pressure Pim can be considered as a turbocharging pressure.

The fuel pressure sensor 74 detects the pressure of fuel in the common-rail injection system (the accumulator) 33 (a fuel pressure, a fuel injection pressure, a common-rail pressure) and outputs a signal that represents a fuel injection pressure Fp.

The in-cylinder pressure sensors 75 are arranged so as to correspond to the respective cylinders (combustion chambers). The in-cylinder pressure sensors 75 detect the pressures in the respective cylinders (i.e., in-cylinder pressures) and output signals that represent in-cylinder pressures Pc.

The crank angle sensor 76 outputs a signal that corresponds to the rotational position of the crankshaft (not shown) of the engine 10 (i.e., the crank angle). The ECU 70 acquires an crank angle of the engine 10 with reference to the compression top dead center of a given cylinder (an absolute crank angle) θ based on signals from the crank angle sensor 76 and a cam position sensor (not shown). Furthermore, the ECU 70 acquires an engine rotational speed Ne based on a signal from the crank angle sensor 76.

The EGR control valve opening degree sensor 77 detects the degree of opening of the EGR control valve 62 and outputs a signal Vegr that represents the degree of opening.

The water temperature sensor 78 detects the temperature of cooling water in the engine 10 (the temperature of the cooling water) and outputs a signal that represents a cooling water temperature THW.

Additionally, the ECU 70 is connected to a gas-pedal opening degree sensor 81 and a vehicle speed sensor 82.

The gas-pedal opening degree sensor 81 detects the degree of opening of a gas pedal (not shown) (a gas pedal manipulated variable) and outputs a signal that represents a gas pedal opening degree Accp.

The vehicle speed sensor 82 detects the travelling speed of a vehicle that is equipped with the engine 10 and outputs a signal that represents a travelling speed (a vehicle speed) Spd in question.

(Overview of Combustion Control)

The function of the present control device will be next described. The present control device performs combustion control such that the heat release rate gravity center position provided by the above-mentioned definitions becomes a predetermined target heat release rate gravity center position (i.e., the combustion parameters are set). The target heat release rate gravity center position is also referred to as a target gravity center position, a target heat release rate gravity center angle, or a target crank angle.

In the present control device, combustion parameters are predetermined for the operating states of the engine (the engine load, the engine rotational speed, and the like, and the target gravity center position), such that the heat release rate gravity center position coincides with the target gravity center position, and stored in a ROM. The present control device reads out the combustion parameters from the ROM in accordance with an actual operating state of the engine and performs control using the combustion parameters (i.e., feedforward control) to make the heat release rate gravity center position coincide with the target gravity center position. Furthermore, the present control device estimates an actual heat release rate gravity center position based on the cylinder pressure Pc detected by the in-cylinder pressure sensors 75 and performs feedback control on the combustion parameters such that the estimated heat release rate gravity center position coincides with the target gravity center position. However, such feedback control is not necessarily indispensable. Furthermore, the feedforward control may not be performed, and the heat release rate gravity center position may be made coincide with the target gravity center position only by the feedback control.

Now, as shown in FIG. 2, if the heat release rate gravity center position coincides with a given crank angle θa (ATDC 7° in FIG. 2), it is possible to provide a good fuel efficiency of the engine 10 independent of the engine load and the engine rotational speed. Thus, the device of the present invention controls the combustion state such that, as shown in FIG. 3(A) or FIG. 3(B), the heat release rate gravity center position coincides with the given crank angle θa when at least the engine load falls within the range between a first threshold value Pem1 and a second threshold value Pem2. Note that the heat release rate gravity center position that should be made coincide with when at least the engine load falls within the range between first threshold value Pem1 and the second threshold value Pem2 may be a certain crank angle θa' (a crank angle within a predetermined range from θa) at which the running costs of the engine 10 that is determined under the relationship with emission is minimized, and at which the fuel efficiency decreasing rate is constant near the minimum value independent of the engine load and the engine rotational speed.

However, it is found that in a state in which the heat release rate gravity center position is made coincide with the given crank angle θa, if the fuel injection quantity is increased as the engine load comes close to the wide-open throttle (WOT), the maximum value of the in-cylinder pressure exceeds the allowable pressure of the engine 10. In contrast, since the sum of the cooling loss and the exhaust loss is minimized (i.e., the fuel efficiency becomes the best) when the heat release rate gravity center position is the given crank angle θa, it is desirable in terms of fuel efficiency to make the heat release rate gravity center position coincide with the given crank angle θa as much as possible.

Thus, the present control device first adjusts the combustion parameter, with the heat release rate gravity center position made coincide with the given crank angle θa, such that the maximum value of the in-cylinder pressure does not exceed the allowable pressure of the engine 10. For example, in the case where the maximum value of the in-cylinder pressure exceeds the allowable pressure when the fuel injection quantity is increased, the present control device makes the combustion sluggish by reducing a turbocharging pressure (opening the nozzle vanes) and/or reducing a fuel injection pressure, so as to keep the maximum value of the in-cylinder pressure to be equal to or lower than the allowable pressure, and if the heat release rate gravity center position is thereby shifted to the retarded angle side, the present control device shifts a main injection period (and/or the pilot injection period) slightly to the advanced angle side to keep the heat release rate gravity center position at the given crank angle θa.

However, if the engine load is further increased (if the fuel injection quantity is further increased), keeping the heat release rate gravity center position at the given crank angle θa can no longer keep the maximum value of the in-cylinder pressure to be equal to or lower than the allowable pressure even if the turbocharging pressure, the fuel injection pressure, and the like are reduced. For this reason, the present control device shifts the heat release rate gravity center position to the retarded angle side from the given crank angle θa. The load at this point is the second threshold value Pem2. As a result, although the fuel efficiency is somewhat reduced, the fuel injection quantity can be increased, and it is thus possible to increase the generated torque of the engine 10 (therefore, the output).

Furthermore, as the load is increased in a region higher than the second threshold value Pem2 (as the fuel injection quantity is increased), the present control device gradually retards the heat release rate gravity center position in a range closer to the retarded angle side than the given crank angle θa (sets the heat release rate gravity center position at a value closer to the retarded angle side). This enables the torque generated by the engine 10 to be increased while keeping the maximum value of the in-cylinder pressure to be equal to or lower than the allowable pressure.

Note that as the heat release rate gravity center position is shifted to the retarded angle side, the exhaust loss is increased, and thus an exhaust gas temperature is increased. Thereafter, at the time when the exhaust gas temperature reaches a highest exhaust gas temperature that the engine 10 can allow (allowable exhaust gas temperature), the present control device stops increasing the fuel injection quantity.

Now, in general, the fuel injection pressure is increased at a higher engine rotational speed. One of the reasons for this is because a time period during which the fuel injection can be performed is shortened when the engine rotational speed is high. Therefore, even if the fuel injection pressure is reduced such that the maximum value of the in-cylinder pressure is kept to be equal to or lower than the allowable pressure, the degree of the reduction has a limit (the higher the engine rotational speed, the higher the fuel injection pressure that can be reduced). On the other hand, the higher the fuel injection pressure, the greater the maximum value of the in-cylinder pressure.

Therefore, in the case where the fuel injection pressure is set such that the fuel injection pressure becomes high at a higher engine rotational speed Ne, as shown in FIG. 3(B), the above-described second threshold value Pem2 becomes small at a higher engine rotational speed Ne, and the second threshold value Pem2 becomes great at a lower engine rotational speed Ne. The present control device controls the fuel pressure pump 31 such that the fuel injection pressure becomes high at a higher engine rotational speed Ne, and thus the heat release rate gravity center position is actually controlled as shown in FIG. 3(B). That is, in the case where the engine load is higher than a predetermined value that is greater than the first threshold value Pem1 (the second threshold value Pem2 corresponding to an assumed maximum value of the engine rotational speed Ne), the target gravity center position is a position that is determined based on the engine load (a requested injection quantity Qfin and a value, such as the gas pedal opening degree Accp, that has correlation with the gas pedal opening degree Accp) and the engine rotational speed Ne. Furthermore, in a region where the engine load exceeds the second threshold value Pem2 corresponding to the assumed maximum value of the engine rotational speed Ne, the target gravity center position is set at a value that is closer to the retarded angle side as the value having a correlation with the gas pedal opening degree Accp becomes great, (the target gravity center position can be considered to monotonically increase because the target gravity center position involves a case of remaining constant at the crank angle θa.), and set at a value that is closer to the retarded angle side at a higher engine rotational speed Ne.

In other words, in a region where the engine load exceeds the second threshold value Pem2, when the engine load takes on any predetermined value (is the same load), the target gravity center position is set at a value closer to the retarded angle side at a higher engine rotational speed Ne.

Note that the device of the present invention controls the combustion state such that the heat release rate gravity center position coincides with the given crank angle θa also when the engine load is equal to or lower than the first threshold value Pem1. However, when the engine load is equal to or lower than the first threshold value Pem1, the device of the present invention may make the heat release rate gravity center position coincide with a crank angle other than the given crank angle θa, based on the other request. Furthermore, as mentioned above, when the engine load falls within the range between the first threshold value Pem1 and the second threshold value Pem2, the device of the present invention may set the heat release rate gravity center position (i.e., the target gravity center position) at a crank angle within a predetermined range from the given crank angle θa (e.g., a crank angle (a certain value) θa' within the range shown by the arrow Ar in FIG. 2).

(Actual Function)

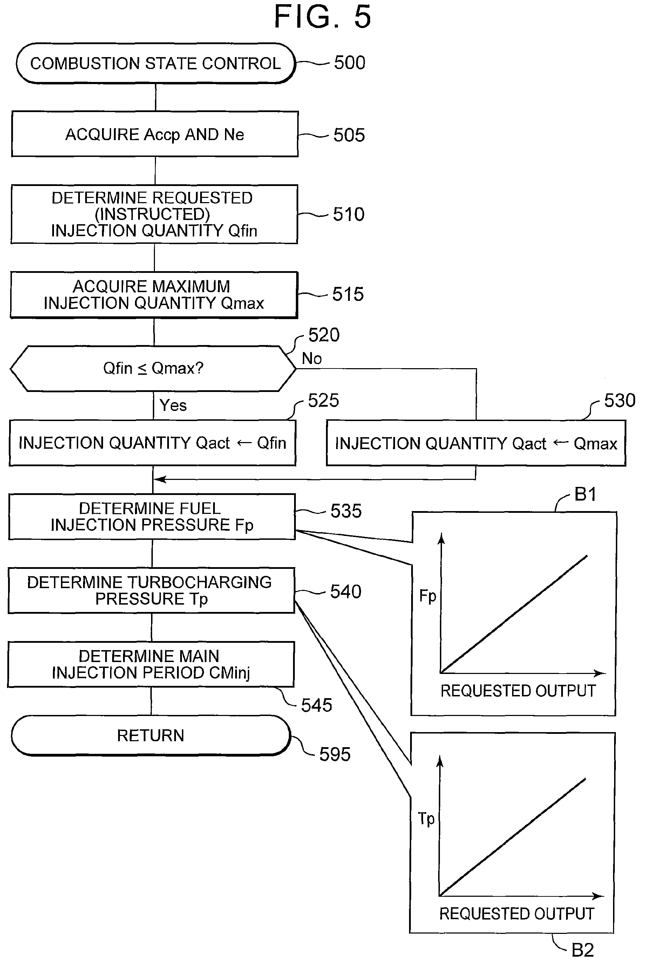

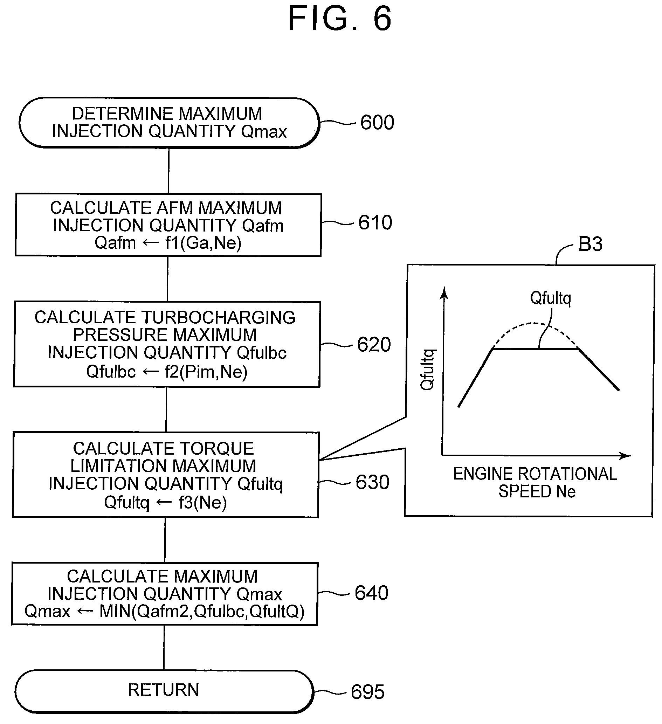

Next, a process for controlling the combustion state will be next described with reference to FIG. 5 and FIG. 6, the process being executed by a CPU of the ECU 70 (hereafter, simply denoted as a CPU). Note that, in the following description, a sign MapX (P1, P2, ...) denotes a look-up table (or a function) with which a value X is obtained using parameters P1, P2, .... Additionally, for ease of description, the CPU hereinafter employs the main injection period, the turbocharging pressure, and the fuel injection pressure as the above-described combustion parameters, and the pilot injection and the after injection are not performed.

<Feedforward Control >

The CPU is configured to execute a combustion state control routine shown by a flowchart in FIG. 5 every elapse of a predetermined time period. Therefore, with an appropriate timing, the CPU starts the process from step 500 in FIG. 5 and performs the processes from step 505 to step 515, which will be described below, in this order, proceeding to step 520.

Step 505: The CPU acquires the gas pedal opening degree Accp and the engine rotational speed Ne.

Step 510: The CPU determines a requested injection quantity (an instructed injection quantity) Qfin (Qfin=MapQfin(Accp, Ne)) based on the gas pedal opening degree Accp and the engine rotational speed Ne. The requested injection quantity Qfin can be considered to be a requested torque.

Step 515: The CPU acquires a maximum injection quantity Qmax that is separately calculated by a routine shown in FIG. 6. The routine shown in FIG. 6 will be described below in detail. The maximum injection quantity Qmax is a smaller injection quantity between a maximum injection quantity that is injectable within a range where hazardous substances such as smoke contained in exhaust gas does not exceed a predetermined threshold value, and a maximum injection quantity that is injectable to the extent at which the torque of the engine 10 does not exceed the allowable limit torque of the driving torque transmission mechanism of a vehicle equipped with the engine 10.

Next, the CPU proceeds to step 520, determining whether the requested injection quantity Qfin is equal to or smaller than the maximum injection quantity Qmax. If the requested injection quantity Qfin is equal to or smaller than the maximum injection quantity Qmax, the CPU determines Yes in step 520, processing to step 525, and sets a final fuel injection quantity Qact at a value equal to the requested injection quantity Qfin. On the other hand, if the requested injection quantity Qfin is larger than the maximum injection quantity Qmax, the CPU determines No in step 520, proceeding to step 530, and sets the final fuel injection quantity Qact at a value equal to the maximum injection quantity Qmax. Note that if there is no restriction on emission and/or allowable limit torque, steps 515 to 530 may be omitted. In this case, the final fuel injection quantity Qact is always equal to the requested injection quantity Qfin.

After performing the process of step 525 or step 530, the CPU performs the processes of steps 535 to 545, which will be described below, in this order, proceeding to step 595 to once finish this routine.

Step 535: The CPU determines the fuel injection pressure Fp based on the final fuel injection quantity Qact and the engine rotational speed Ne, and a look-up table MapFp (Qact,Ne). At this point, the fuel injection pressure Fp is set at a value that is substantially proportional to a requested output Pr, as shown in block B1. However, as mentioned above, in a region where the engine load (in this case, the requested injection quantity Qfin) becomes equal to or greater than a predetermined value, and the maximum value of the in-cylinder pressure exceeds the allowable pressure, the fuel injection pressure Fp is set at a value that is decreased as the final fuel injection quantity Qact is increased. Furthermore, in a region where the engine load exceeds the above-mentioned second threshold value Pem2 that is decreased at a higher engine rotational speed Ne, the fuel injection pressure Fp is kept at a substantially constant value. The CPU controls the fuel pressure pump 31 and the like under a driving routine (not shown) such that an actual fuel injection pressure is equal to the fuel injection pressure Fp determined in this step 535.

Step 540: The CPU determines the turbocharging pressure Tp based on the final fuel injection quantity Qact and the engine rotational speed Ne, and a look-up table MapTp (Qact,Ne). At this point, the turbocharging pressure Tp is set at a value that is substantially proportional to the requested output Pr, as shown in block B2. However, as mentioned above, in a region where the engine load (in this case, the requested injection quantity Qfin) becomes equal to or greater than a predetermined value, and the maximum value of the in-cylinder pressure exceeds the allowable pressure, the turbocharging pressure Tp is set at a value that is decreased as the final fuel injection quantity Qact is increased. Furthermore, in a region where the engine load exceeds the above-mentioned second threshold value Pem2 that is decreased at a higher engine rotational speed Ne, the turbocharging pressure Tp is kept at a substantially constant value. The CPU controls the turbocharger 44 under a driving routine (not shown) such that an actual turbocharging pressure is equal to the turbocharging pressure Tp determined in this step 540.

Step 545: The CPU determines a fuel injection timing CMinj of the main injection based on the final fuel injection quantity Qact and the engine rotational speed Ne, and a look-up table MapCMinj (Qact,Ne). This look-up table MapCMinj (Qact,Ne) is determined in advance according to experiments, such that the heat release rate gravity center position coincides with a target gravity center position Gctgt shown in FIG. 3(B), and is stored in the ROM. Thereafter, the CPU proceeds to step 595, once finishing this routine.

Note that when the crank angle of any cylinder coincides with the fuel injection timing CMinj determined in this step 545, the CPU causes fuel having the fuel injection quantity Qact to be injected from the fuel injection valve 23 of the cylinder.

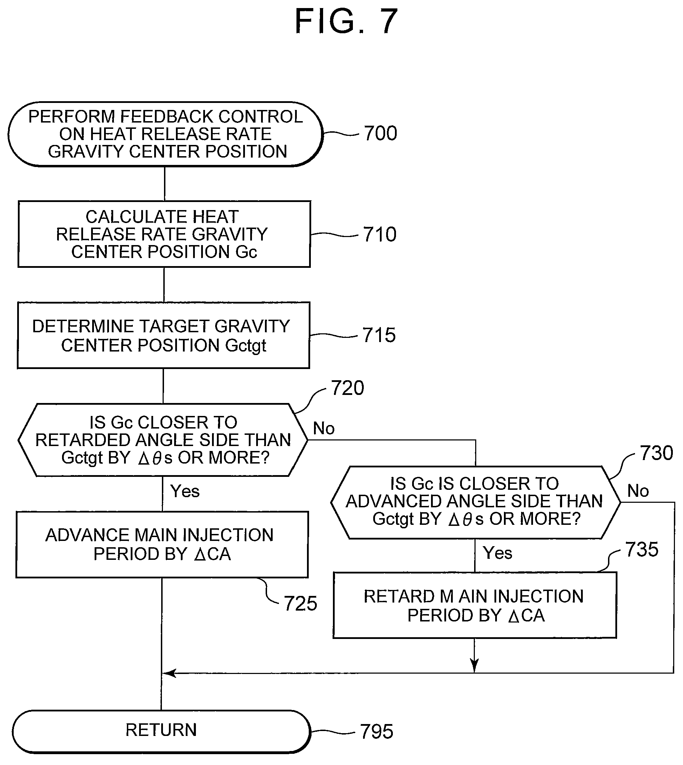

As a result of the above processes, the heat release rate gravity center position is caused to substantially coincide with the target gravity center position Gctgt shown in FIG. 3(B). Note that the fuel injection timing CMinj of main fuel is adjusted under a feedback control shown in FIG. 7 such that the heat release rate gravity center position Gc does not significantly deviate from the target gravity center position Gctgt due to individual differences, aged deterioration, and the like of the engine 10.

<Determination of Maximum Injection Quantity>

The CPU is configured to execute a routine for determining the maximum injection quantity Qmax, shown by a flowchart in FIG. 6, every elapse of a predetermined time period. Therefore, with an appropriate timing, the CPU starts the process from step 600 in FIG. 6 and performs the processes from step 610 to step 640, which will be described below, in this order, proceeding to step 695 to once finish this routine.

Step 610: The CPU calculates an AFM maximum injection quantity Qafm based on the intake air amount Ga measured by the air flow meter 71 and the engine rotational speed Ne. On the basis of the intake air amount Ga measured by the air flow meter 71 and the engine rotational speed Ne, the amount of air that is actually taken in a cylinder in one intake stroke (fresh air amount) can be estimated with high accuracy regardless of EGR gas volume. In contrast, smoke exceeds an allowable value when the fuel injection quantity becomes excessive relative to the amount of air that is actually taken in the cylinder in one intake stroke. Therefore, the CPU can calculate, as the AFM maximum injection quantity Qafm, the maximum value of the fuel injection quantity at which the smoke does not exceed the allowable limit, based on the intake air amount Ga measured by the air flow meter 71 and the engine rotational speed Ne. Note that a relationship f1 (=MapQafm(Ga,Ne)) between the intake air amount Ga and the engine rotational speed Ne, and the AFM maximum injection quantity Qafm is determined in advance according to experiments and is stored in the ROM.

Step 620: The CPU calculates a turbocharging pressure maximum injection quantity Qfulbc based on an intake pipe pressure (turbocharging pressure) Pim detected by the intake pipe pressure sensor 73 and the engine rotational speed Ne. On the basis of the intake pipe pressure Pim and the engine rotational speed Ne, the amount of air that is actually taken in the cylinder in one intake stroke can be quickly estimated as compared with the case where the estimation is made based on the measured value Ga by the air flow meter 71 and the engine rotational speed Ne. Therefore, the CPU can calculate, as the turbocharging pressure maximum injection quantity Qfulbc, the maximum value of the fuel injection quantity at which smoke does not exceed the allowable limit based on the intake pipe pressure Pim detected by the intake pipe pressure sensor 73 and the engine rotational speed Ne. Note that a relationship f2 (=MapQfulbc(Ga, Ne)) between the intake pipe pressure Pim and the engine rotational speed Ne, the turbocharging pressure maximum injection quantity Qfulbc is determined in advance according to experiments and is stored in the ROM. In particular, in a high-load high-rotational-speed region, turbocharging is substantially performed and the backflow of EGR gas is stopped, and thus turbocharging pressure maximum injection quantity Qfulbc is a value having a high accuracy.

Step 630: The CPU calculates a torque limitation maximum injection quantity Qfultq based on the engine rotational speed Ne. Depending on the driving torque transmission mechanism of a vehicle equipped with the engine 10, the engine 10 may be demanded not to generate a torque of a predetermined allowable limit torque or more. The torque limitation maximum injection quantity Qfultq is a maximum amount of fuel injection used for such torque limitation. A relationship f3 (=MapQfultq(Ne)) between the engine rotational speed Ne and the torque limitation maximum injection quantity Qfultq is determined in advance and stored in the ROM (see a solid line in block B3 in FIG. 6).

Step 640: The CPU employs the minimum value of the AFM maximum injection quantity Qafm, the turbocharging pressure maximum injection quantity Qfulbc, and the torque limitation maximum injection quantity Qfultq, as the maximum injection quantity Qmax.

Note that at the time of determining the values of the AFM maximum injection quantity Qafm, the turbocharging pressure maximum injection quantity Qfulbc, and the torque limitation maximum injection quantity Qfultq, the CPU may add a correction with the intake air temperature THA.

<Feedback Control>

The CPU is configured to execute a feedback control routine of the heat release rate gravity center position shown by the flowchart in FIG. 7 on the any cylinder whenever the crank angle of any cylinder rotates by 720°. That is, the CPU executes the feedback control routine of the heat release rate gravity center position shown by the flowchart in FIG. 7 for each cylinder.

By this routine, the injection period CMinj of the main injection is adjusted under the feedback control such that the actual heat release rate gravity center position Gc is equal to the target gravity center position Gctgt shown in FIG. 3(B). Note that the crank angle $\theta$ is represented by a crank angle (ATDC deg) from a compression top dead center of a cylinder that is focused on. Therefore, the crank angle $\theta$ that is advanced angle side from the compression top dead center takes on a negative value.

More specifically, when the crank angle of a certain cylinder coincides with the intake top dead center of the cylinder, the CPU starts a process from step 700 in FIG. 7, proceeding to step 710, and calculates a heat release rate $dQ(\theta)$ [J/degATDC], which is a calorific power per unit crank angle with respect to the crank angle $\theta$ [degATDC] based on a cylinder pressure Pc in the latest one cycle of the cylinder (focused cylinder) using a known technique (e.g., see Japanese Patent Application Publication No. 2005-54753, Japanese Patent Application Publication No. 2007-285194, and the like). Note that the CPU is configured to acquire the cylinder pressure Pc of each cylinder every rotation of the unit crank angle and stores the cylinder pressure Pc in the RAM associating the cylinder pressure Pc with the cylinder of which the cylinder pressure Pc is acquired and with the crank angle of the cylinder.

Next, the CPU applies the heat release rate $dQ(\theta)$ to the following Expression (4) to acquire/estimate the heat release rate gravity center position Gc. Actually, the heat release rate gravity center position Gc is calculated based on an expression obtained by converting Expression (4) into a digital arithmetic expression. In Expression (4), CAs is a crank angle at which combustion is started (a combustion starting crank angle), and CAe is a crank angle at which the combustion is ended (a combustion ending crank angle). Note that, in place of CAs in Expression (4), a crank angle that is sufficiently earlier than combustion starting crank angle is employed in the calculation using Expression (4), and in place of CAe, a crank angle that is sufficiently later than the combustion ending crank angle is employed in the calculation using Expression (4).

[Expression 4]

$$Gc = \frac{\int_{CAs}^{CAe} (\theta - CAs)\, dQ(\theta)\, d\theta}{\int_{CAs}^{CAe} dQ(\theta)\, d\theta} + CAs \cdots (4)$$

Next, the CPU proceeds to step 715, determining the target gravity center position Gctgt based on the final fuel injection quantity Qact (a value equivalent to the engine load) and the engine rotational speed Ne, and a look-up table MapGctgt (Qact,Ne) equivalent to the look-up table shown in FIG. 3(B). Note that the CPU may determine the target gravity center position Gctgt based on the gas pedal opening degree Accp, the engine rotational speed Ne, and the look-up table MapGctgt (Accp,Ne) or may determine the target gravity center position Gctgt based on the requested injection quantity (instructed injection quantity) Qfin, the engine rotational speed Ne, and the look-up table MapGctgt (Qfin,Ne). That is, the CPU determines the target gravity center position Gctgt based on a value having a correlation with the gas pedal opening degree (engine load) and the engine rotational speed Ne.

Next, the CPU proceeds to step 720, determining whether the heat release rate gravity center position Gc is on the retarded angle side from the target gravity center position Gctgt by a positive minute angle $\Delta\theta$s or more. If the heat release rate gravity center position Gc is on the retarded angle side from target gravity center position Gctgt by the positive minute angle $\Delta\theta$s or more, the CPU determines Yes in step 720, proceeding to step 725, and advances the injection period CMinj of the main injection of the cylinder (focused cylinder) for which the heat release rate gravity center position Gc is calculated in step 710, by a predetermined minute angle $\Delta CA$. This causes the heat release rate gravity center position Gc of the focused cylinder to be slightly shifted to the advanced angle side and to come close to the target gravity center position Gctgt. Thereafter, the CPU proceeds to step 795 to once finish this routine.

In contrast to this, if the heat release rate gravity center position Gc is not on the retarded angle side from the target gravity center position Gctgt by the positive minute angle $\Delta\theta s$ or more when the CPU executes the process of step 720, the CPU determines No in step 720, proceeding to step 730, and determines whether the heat release rate gravity center position Gc is on the advanced angle side from the target gravity center position Gctgt by the positive minute angle $\Delta\theta s$ or more. If the heat release rate gravity center position Gc is on the advanced angle side from the target gravity center position Gctgt by the positive minute angle $\Delta\theta s$ or more, the CPU determines Yes in step 730, proceeding to step 735, and retards the injection period CMinj of the main injection of the cylinder (focused cylinder) for which the heat release rate gravity center position Gc is calculated in step 710, by the predetermined minute angle $\Delta CA$. This causes the heat release rate gravity center position Gc of the focused cylinder to be slightly shifted to the retarded angle side and to come close to the target gravity center position Gctgt. Thereafter, the CPU proceeds to step 795 to once finish this routine.

Furthermore, if the heat release rate gravity center position Gc is not on the advanced angle side from the target gravity center position Gctgt by the positive minute angle $\Delta\theta s$ or more when the CPU executes the process of step 730, the magnitude of the difference between the heat release rate gravity center position Gc and the target gravity center position Gctgt is less than the minute angle $\Delta\theta s$. In this case, the CPU determines No in step 730, directly proceeding to step 795 to once finish this routine. That is, the injection period CMinj of the main injection of the cylinder for which the heat release rate gravity center position Gc is calculated in step 710 is not corrected.

Note that the CPU may execute, between step 700 and step 710, a step of determining whether a current operating state specified by the gas pedal opening degree Accp and the engine rotational speed Ne is the same as an operating state earlier by a predetermined time period. Then, the CPU may proceed to step 710 and subsequent steps if the current operating state is determined to be the same as the operating state earlier by the predetermined time period, and may proceed directly to step 795 if the current operating state is not determined to be the same as the operating state earlier by the predetermined time period.

According to this, it is possible to perform the feedback control on the heat release rate gravity center position Gc only if the operating state is not changed, and to perform the feedback control after once setting again the combustion parameters under the feedforward control if the operating state is changed.

As described above, the control device for an internal combustion engine according to the present embodiment changes the combustion state of air fuel mixture such that if at least the load on the engine 10 falls within the range between the first threshold value Pem1 and the second threshold value Pem2 (the specified load range), the heat release rate gravity center position Gc is equal to the given crank angle ($\theta a$ or $\theta a'$) independent of the engine load (and/or the engine rotational speed Ne), or if the engine load falls within the range beyond second threshold value Pem2, the heat release rate gravity center position Gc is changed to a value on the retarded angle side in the range on the retarded angle side from the given crank angle ($\theta a$ or $\theta a'$) as the engine load is increased (see FIG. 3(A) or (B)).

Furthermore, the given crank angle $\theta a$ corresponds to a crank angle at which the sum of the cooling loss of the engine and the exhaust loss of the engine is minimized (see FIG. 2). Additionally, the second threshold value Pem2 is decreased at a higher engine rotational speed Ne (see FIG. 3(B)). Furthermore, the heat release rate gravity center position Gc is a crank angle that is determined in accordance with a value having a correlation with the gas pedal opening degree (the engine load and/or the fuel injection quantity), and the engine rotational speed (see FIG. 3(B) and step 715 in FIG. 7).

Therefore, the present control device can cause the maximum value of the in-cylinder pressure not to exceed the allowable pressure in a high load operating state while controlling the heat release rate gravity center position to an appropriate crank angle (a crank angle $\theta a'$ as close to the given crank angle $\theta a$ or the crank angle $\theta a$ as possible). As a result, it is possible to improve the fuel efficiency of the engine, and to prevent the torque generated by the engine from being reduced below the requested torque under a high load. In other words, the present control device can cause the maximum torque that the engine can generate not to be reduced.

The present invention is not limited to the above-described embodiment, and various modifications thereof can be employed within the scope of the present invention. For example, the above-described embodiment can employ one or more values described below, as the combustion parameters.

(1) Main injection period
(2) Fuel injection pressure being a pressure at the time when a fuel injection valve injects fuel
(3) Fuel injection quantity of the pilot injection being a fuel injection performed on the advanced angle side from the main injection

(4) Number of pilot injections

(5) Pilot injection period

(6) Fuel injection quantity in each pilot injection

(7) Injection quantity in an after injection being a fuel injection performed on the retarded angle side from the main injection

(8) Turbocharging pressure by the turbocharger 44

(9) Cooling efficiency (cooling capacity) of the intercooler 45

(10) EGR rate (or EGR gas amount) being the ratio of EGR gas to intake air

(11) Cooling efficiency (cooling capacity) of the EGR cooler 63

(12) Strength of swirl flow in a cylinder (e.g., the degree of opening of a swirl control valve)

Note that in the case of advancing the heat release rate gravity center position Gc, the control device may perform one of the following operations.

(1a) The control device shifts the main injection period to the advanced angle side.

(2a) The control device causes the fuel injection pressure to be increased.

(3a) The control device causes the fuel injection quantity in the pilot injection to be increased.

(4a) The control device changes the number of pilot injections such that the heat release rate gravity center angle of the pilot injection that is determined only on the pilot injection is shifted to the advanced angle side.

(5a) The control device changes the pilot injection period such that the heat release rate gravity center angle of the pilot injection is shifted to the advanced angle side.

(6a) The control device changes the fuel injection quantity in each pilot injection such that the heat release rate gravity center angle of the pilot injection is shifted to the advanced angle side.

(7a) The control device reduces the injection quantity of the after injection or does not perform the after injection.

(8a) The control device causes the turbocharging pressure to be increased.

(9a) The control device causes the cooling efficiency of the intercooler 45 to be reduced by increasing the degree of opening of the bypass valve in the intercooler 45 or causing the volume of cooling water to be reduced.

(10a) The control device causes the EGR rate to be reduced (causes the EGR amount to be reduced) by causing the degree of opening of the EGR control valve 62 to be reduced (causing the passage cross-sectional area of the EGR gas passage to be reduced).

(11a) The control device causes the cooling efficiency of the EGR cooler 63 to be reduced by increasing the degree of opening of the bypass valve in of the EGR cooler 63 or causing the volume of cooling water to be reduced.

(12a) The control device causes the strength of swirl flow to be increased.

In the case of retarding the heat release rate gravity center position Gc, the control device may perform one of the following operations.

(1b) The control device shifts the main injection period to the retarded angle side.

(2b) The control device causes the fuel injection pressure to be reduced.

(3b) The control device causes the fuel injection quantity in the pilot injection to be reduced.

(4b) The control device changes the number of pilot injections such that the heat release rate gravity center angle of the pilot injection that is determined only on the pilot injection is shifted to the retarded angle side.

(5b) The control device changes the pilot injection period such that the heat release rate gravity center angle of the pilot injection is shifted to the retarded angle side.

(6b) The control device changes the fuel injection quantity in each pilot injection such that the heat release rate gravity center angle of the pilot injection is shifted to the retarded angle side.

(7b) The control device increases the injection quantity of the after injection.

(8b) The control device causes the turbocharging pressure to be reduced.

(9b) The control device causes the cooling efficiency of the intercooler 45 to be increased by reducing the degree of opening of the bypass valve in the intercooler 45 or causing the volume of cooling water to be increased.

(10b) The control device causes the EGR rate to be increased (causes the EGR amount to be increased) by causing the degree of opening of the EGR control valve 62 to be increased (causing the passage cross-sectional area of the EGR gas passage to be increased).

(11b) The control device causes the cooling efficiency of the EGR cooler to be increased by reducing the degree of opening of the bypass valve in the EGR cooler 63 or causing the volume of cooling water to be increased.

(12b) The control device causes the strength of swirl flow to be reduced.

Furthermore, the CPU may determine based on, for example, the final fuel injection quantity Qact (actually, the requested injection quantity Qfin), the engine rotational speed Ne, the cooling water temperature THW, and the look-up tables,

- Fuel injection quantity QMinj (=MapQMinj(Qact,Ne,THW)) of the main injection,
- Fuel injection timing CMinj (=MapCMinj(Qact,Ne,THW)) of the main injection,
- Fuel injection quantity QPinj (=MapQPinj(Qact,Ne,THW)) of the pilot injection and,
- fuel injection timing CPinj (=MapCPinj(Qact,Ne,THW)) of the pilot injection.

Also in this case, the look-up tables are determined in advance according to experiments or the like such that the heat release rate gravity center position coincides with the target gravity center position shown in FIG. 3(A) or (B) when combustion is performed using the combustion parameters determined by the look-up tables. Note that in the case where the cooling water temperature THW is equal to or higher than a predetermined water temperature threshold value, the fuel injection quantity of the pilot injection QPinj may be set at zero.

Furthermore, the CPU may control the combustion state such that the heat release rate gravity center position Gc is changed depending only on the engine load, as shown in FIG. 3(A). Additionally, in the above-described embodiment, the heat release rate gravity center position as a control target in the case where the load of the engine 10 falls within the range between the first threshold value Pem1 and the second threshold value Pem2 (i.e., the above-described given crank angle $\theta$a) is ATDC7°, but this value varies according to engine. Furthermore, in the above-described embodiment, this given crank angle $\theta$a is common to all the cylinders but may be a value that differs between cylinders according to the model of engine.

## Claims

1. A control device for controlling a heat release rate gravity center position by controlling a combustion state of fuel that is supplied to a cylinder of an internal combustion engine, wherein
the control device sets a combustion parameter for controlling the combustion state such that, if at least a load on the engine falls within a range between a first threshold value and a second threshold value that is greater than the first threshold value, the heat release rate gravity center position is equal to a given crank angle independent of the load, and if the load on the engine falls within a range beyond the second threshold value, the heat release rate gravity center position is changed to a crank angle closer to a retarded angle side in a range on the retarded angle side from the given crank angle as the load is increased.

2. The control device according to claim 1, wherein
the second threshold value is decreased at a higher engine rotational speed.

3. The control device according to claim 1, wherein
if the load on the engine is a predetermined load that falls within a range beyond than the second threshold value, the control device sets the combustion parameter such that the heat release rate gravity center position is made a crank angle closer to the retarded angle side at a higher engine rotational speed.

4. The control device according to claim 4 or claim 5, wherein
the second threshold value is a value of the load corresponding to an operating state in which, in a case where the fuel injection quantity is increased in response to an increase in load of the engine, a maximum value of a pressure in the cylinder becomes higher than an allowable pressure if the heat release rate gravity center position is not caused to be changed to a crank angle closer to the retarded angle side than the given crank angle.

5. The control device according to any one of claim 1 to claim 6, wherein
the heat release rate gravity center position is a crank angle that is determined in accordance with the load of the engine or the fuel injection quantity, and an engine rotational speed.

6. The control device according to any one of claim 1 to claim 5, wherein
the given crank angle is a crank angle at which a sum of a cooling loss of the engine and an exhaust loss of the engine is minimized, or is a crank angle that falls within a predetermined range from the crank angle.

7. The control device according to any one of claim 1 to claim 6, wherein
the heat release rate gravity center position is
a crank angle corresponding to a geometric gravity center of a region that is surrounded by a waveform that depicts a heat release rate in a graph in which a crank angle is set to one axis and the heat release rate is set to another axis orthogonal to the one axis and by the one axis.

8. The control device according to any one of claim 1 to claim 6, wherein
the heat release rate gravity center position is a specific crank angle at which
a value obtained by integrating, with respect to crank angle, a product of a crank angle difference between any crank angle on an advanced angle side from the specific crank angle and the specific crank angle, and a heat release rate at the any crank angle is equal to
a value obtained by integrating, with respect to crank angle, a product of a crank angle difference between any crank angle on the retarded angle side from the specific crank angle and the specific crank angle, and the heat release rate at the any crank angle.

9. The control device according to any one of claim 1 to claim 6, wherein
the heat release rate gravity center position is the specific crank angle at which
a value obtained by integrating, in one combustion stroke, with respect to the crank angle, a value that corresponds to a product of a value obtained by subtracting the specific crank angle from any crank angle and a heat release rate at the any crank angle, is zero.

10. The control device according to any one of claim 1 to claim 6, wherein
the heat release rate gravity center position is a crank angle that is calculated in conformity with an expression,
[Expression 1]

$$Gc = \frac{\int_{CAs}^{CAe}(\theta - CAs)dQ(\theta)d\theta}{\int_{CAs}^{CAe}dQ(\theta)d\theta} + CAs \quad \cdots (1)$$

where a combustion starting crank angle is denoted by CAs, a combustion ending crank angle is denoted by CAe, any crank angle is denoted by $\theta$, and a heat release rate at the crank angle $\theta$ is denoted by $dQ(\theta)$, in one combustion stroke.

11. The control device according to any one of claim 1 to claim 6, wherein
the heat release rate gravity center position is a crank angle obtained by
adding a combustion starting crank angle to a value obtained by dividing an integrated value of, with respect to crank angle, a product (A*B) of a difference (A) between any crank angle and the combustion starting crank angle, and a heat release rate (B) at the any crank angle by an area of a region that is defined by a waveform of a heat release rate with respect to crank angle.

# FIG. 1

(A) HEAT RELEASE RATE GRAVITY CENTER ANGLE

(B) CORRECT PILOT INJECTION TO ADVANCED ANGLE SIDE

# FIG. 2

FUEL EFFICIENCY
DECREASING RATE

Gc1 : UNDER LOW LOAD AND
AT LOW ROTATIONAL SPEED
Gc2 : UNDER MIDDLE LOAD
AND AT MIDDLE ROTATIONAL SPEED
Gc3 : UNDER HIGH LOAD AND
AT HIGH ROTATIONAL SPEED

Gc3

1.05

Gc2

Gc1

BEST FUEL
EFFICIENCY POINT

1.00

0

$\theta$a=7

16

HEAT RELEASE
RATE GRAVITY
CENTER POSITION
[degATDC]

Ar

# FIG. 3

(A)

RETARDED ANGLE

TARGET HEAT RELEASE RATE
GRAVITY CENTER POSITION Gctgt [degATDC]

$\theta$a

Pem1

Pem2

LIGHT

ENGINE LOAD
(Pme=k·TQ/Dis)

HEAVY

TQ=ENGINE GENERATED TORQUE
Dis=DISPLACEMENT

(B)

RETARDED ANGLE

TARGET HEAT RELEASE RATE
GRAVITY CENTER POSITION Gctgt [degATDC]

ENGINE ROTATIONAL SPEED   HEAVY
Ne BECOMES HIGH

$\theta$a

Pem1

Pem2

LIGHT

ENGINE LOAD
(Pme=k·TQ/Dis)

HEAVY

TQ=ENGINE GENERATED TORQUE
Dis=DISPLACEMENT

# FIG. 4

# FIG. 5

COMBUSTION STATE CONTROL —— 500

ACQUIRE Accp AND Ne —— 505

DETERMINE REQUESTED (INSTRUCTED) INJECTION QUANTITY Qfin —— 510

ACQUIRE MAXIMUM INJECTION QUANTITY Qmax —— 515

Qfin ≤ Qmax? —— 520    No

Yes —— 525    —— 530

INJECTION QUANTITY Qact ← Qfin    INJECTION QUANTITY Qact ← Qmax

DETERMINE FUEL INJECTION PRESSURE Fp —— 535

B1

DETERMINE TURBOCHARGING PRESSURE Tp —— 540

DETERMINE MAIN INJECTION PERIOD CMinj

—— 545

RETURN —— 595

Fp

REQUESTED OUTPUT

Tp

REQUESTED OUTPUT

B2

# FIG. 6

DETERMINE MAXIMUM INJECTION QUANTITY Qmax ~ 600

CALCULATE AFM MAXIMUM INJECTION QUANTITY Qafm
$Qafm \leftarrow f1(Ga,Ne)$ ~ 610

CALCULATE TURBOCHARGING PRESSURE MAXIMUM INJECTION QUANTITY Qfulbc
$Qfulbc \leftarrow f2(Pim,Ne)$ ~ 620

CALCULATE TORQUE LIMITATION MAXIMUM INJECTION QUANTITY Qfultq
$Qfultq \leftarrow f3(Ne)$ ~ 630

B3

Qfultq

ENGINE ROTATIONAL SPEED Ne

CALCULATE MAXIMUM INJECTION QUANTITY Qmax
$Qmax \leftarrow MIN(Qafm2,Qfulbc,QfultQ)$ ~ 640

RETURN ~ 695

# FIG. 7

PERFORM FEEDBACK CONTROL
ON HEAT RELEASE RATE
GRAVITY CENTER POSITION — 700

CALCULATE HEAT
RELEASE RATE GRAVITY
CENTER POSITION Gc — 710

DETERMINE TARGET GRAVITY
CENTER POSITION Gctgt — 715

720
IS Gc CLOSER TO
RETARDED ANGLE SIDE THAN
Gctgt BY $\Delta\theta$s OR MORE?

No

Yes

ADVANCE MAIN INJECTION
PERIOD BY $\Delta$CA

725

730
IS Gc IS CLOSER TO
ADVANCED ANGLE SIDE THAN
Gctgt BY $\Delta\theta$s OR MORE?

No

Yes

735
RETARD M AIN INJECTION
PERIOD BY $\Delta$CA

RETURN — 795

# FIG. 8

(A) COMBUSTION WAVEFORM

HEAT RELEASE RATE
[J/degATDC]

Lm

C1

Lp

θ1    θ2

CRANK
ANGLE
[degATDC]

(B) COMBUSTION GRAVITY CENTER ANGLE

HEAT VALUE RATIO
[%]

100

50

0

COMBUSTION GRAVITY
CENTER ANGLE = θ3

θ1    θ2    θ3

CRANK
ANGLE
[degATDC]

# FIG. 9

(A) COMBUSTION WAVEFORM

HEAT RELEASE RATE
[J/degATDC]

Lm

C2

Lp

$\theta 0$     $\theta 2$

$\theta 1$

$\Delta \theta$

CRANK
ANGLE
[degATDC]

(B) COMBUSTION GRAVITY CENTER ANGLE

HEAT VALUE RATIO
[%]

100

50

$\Delta \theta$

COMBUSTION GRAVITY
CENTER ANGLE $= \theta 3$

0

$\theta 0$    $\theta 2$    $\theta 3$

$\theta 1$

CRANK
ANGLE
[degATDC]

# FIG. 10

FUEL EFFICIENCY
DECREASING RATE

1.05

Hb3

Hb2

Hb1

1.00

0

16

COMBUSTION
GRAVITY
CENTER ANGLE
[degATDC]

BEST FUEL EFFICIENCY POINT

## INTERNATIONAL SEARCH REPORT

International application No.

PCT/JP2013/065594

| A. CLASSIFICATION OF SUBJECT MATTER |
|---|
| *F02D41/04*(2006.01)i |

According to International Patent Classification (IPC) or to both national classification and IPC

| B. FIELDS SEARCHED |
|---|
| Minimum documentation searched (classification system followed by classification symbols) |
| F02D41/04 |

Documentation searched other than minimum documentation to the extent that such documents are included in the fields searched

| Jitsuyo Shinan Koho | 1922-1996 | Jitsuyo Shinan Toroku Koho | 1996-2013 |
|---|---|---|---|
| Kokai Jitsuyo Shinan Koho | 1971-2013 | Toroku Jitsuyo Shinan Koho | 1994-2013 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 1-216073 A  (Mazda Motor Corp.), 30 August 1989 (30.08.1989), page 2, lower left column, lines 3 to 15 (Family: none) | 1-11 |
| A | JP 3-199651 A  (Toyota Motor Corp.), 30 August 1991 (30.08.1991), page 4, lines 1 to 4 (Family: none) | 1-11 |
| A | JP 2011-202629 A  (Toyota Motor Corp.), 13 October 2011 (13.10.2011), paragraphs [0010] to [0011] (Family: none) | 1-11 |

☐ Further documents are listed in the continuation of Box C.          ☐ See patent family annex.

| * Special categories of cited documents: | |
|---|---|
| "A" document defining the general state of the art which is not considered to be of particular relevance | "T" later document published after the international filing date or priority date and not in conflict with the application but cited to understand the principle or theory underlying the invention |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 28 June, 2013 (28.06.13) | 09 July, 2013 (09.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011202629 A
- JP 2005054753 A
- JP 2007285194 A